# EUROPÄISCHE PATENTSCHRIFT

(11) **EP 3 800 145 B1**
(45) Veröffentlichungstag und Bekanntmachung des Hinweises auf die Patenterteilung: **11.01.2023**
(21) Anmeldenummer: 20193785.1
(22) Anmeldetag: 01.09.2020
(51) Int. Cl.: B65G 15/34, B65G 43/02

(54) **SYSTEM ZUM TRANSPORT VON TRANSPORTGUT**
SYSTEM FOR TRANSPORTING GOODS
SYSTÈME DE TRANSPORT DE MARCHANDISES

(30) Priorität: 01.10.2019 DE 102019215089
(43) Veröffentlichungstag der Anmeldung: 07.04.2021
(73) Patentinhaber: ContiTech Transportbandsysteme GmbH, 30165 Hannover (DE)
(72) Erfinder: Wennekamp, Tobias - c/o Continental AG, 30419 Hannover (DE); Raffler, Patrick - c/o Continental AG, 30419 Hannover (DE)
(74) Vertreter: Continental Corporation

(56) Entgegenhaltungen:
- DE-A1- 19 652 236
- DE-A1- 19 831 854
- DE-A1-102013 111 191
- DE-U1- 29 604 039
- JP-A- 2014 031 241
- US-A- 6 158 576

## Beschreibung

Die Erfindung betrifft ein System zum Transport von Transportgut. Derartige Systeme mit einem Riemen und mehreren Umlenkrollen sind aus dem Stand der Technik bekannt. Bei diesen Systemen ist eine Antriebseinheitseinheit vorgesehen, die den Riemen in einer Umlaufrichtung antreibt. Das Transportgut kann auf den Riemen gegeben werden, sodass das Transportgut von dem Riemen in Umlaufrichtung gefördert wird.

Beim Transport des Transportguts durch den Riemen, kann der Riemen beschädigt werden. Beispielsweise kann sich ein Riss, der sich in Umlaufrichtung erstreckt, in dem Riemen bilden. Wenn ein derartiger Riss frühzeitig erkannt wird, kann der Antrieb des Riemens frühzeitig gestoppt werden und eine weitere Beschädigung des Riemens, beispielsweise durch die Ausbreitung des Risses, kann vermieden und der Riemen kostengünstig repariert werden.

Des Weiteren ist es wünschenswert Systeme bereitzustellen, deren Riemen besonders leicht und platzsparend sind.

Die US 6,158,576 A offenbart die Merkmale des Oberbegriffs des Anspruchs 1 und betrifft endlose Bänder und Gewebe zur Verwendung in einem

Prozessregelkreis, der bei der Herstellung der in der Beschreibung angegebenen Produkte verwendet werden kann. Das Band ist mit Mitteln versehen, die bei Anregung durch eine Energiequelle elektromagnetische Strahlung aussenden. Das heißt, das Band ist mit einem Sensor versehen, der elektromagnetische Strahlung aussendet, wenn er durch eine Energiequelle, z. B. eine externe, die auf das Band gerichtet ist, angeregt wird. Ein Sensor besteht aus einer elektromagnetische Strahlung emittierenden Verbindung, die in einer Matrix verteilt ist. Der Sensor kann auch ein streuendes Material enthalten. Der Sensor kann die Form eines fadenförmigen Materials, einer Beschichtung oder eines Films annehmen, der dann auf oder in das Band eingebaut werden kann. Im Betrieb wird die von einer Energiequelle abgegebene Energie auf das Band gerichtet. Wenn der Sensor durch die Energie angeregt wird, sendet er elektromagnetische Strahlung aus, die von einem in der Nähe befindlichen Detektor erfasst wird. Anhand der Intensität und der Spitzenwellenlänge der vom Sensor ausgesandten elektromagnetischen Strahlung kann der Maschinenbediener nützliche Informationen über den Betrieb des Bandes und die Bedingungen, unter denen es läuft, erfahren.

Der Erfindung liegt deshalb die Aufgabe zugrunde, ein System mit einem Riemen bereitzustellen, wobei das System einen Längsriss in dem Riemen frühzeitig erkennt und gleichzeitig ein besonders leichter und platzsparender Riemen bereitgestellt wird.

Gelöst wird die Aufgabe durch ein System mit den Merkmalen des Anspruchs 1. Vorgesehen ist also ein System, das mehrere Umlenkrollen aufweist. Außerdem weist das System einen Riemen, eine Antriebseinheit, einen Erregermagneten, und eine Sensoreinheit auf. Der Riemen umschlingt die Umlenkrollen jeweils teilweise, sodass von dem Riemen mindestens ein erstes Trum und ein zweites Trum gebildet sind. Eine Umlenkrolle der Umlenkrollen ist mit einer Antriebseinheitseinheit gekoppelt, um den Riemen über diese Umlenkrolle in einer Umlaufrichtung anzutreiben. Der Riemen weist ein Trägermaterial und ein Gewebe auf. Das Gewebe weist erste Fäden und sich zu den ersten Fäden quer erstreckende zweite Fäden auf. Das Gewebe ist in dem Trägermaterial eingebettet. Mindestens ein Faden der ersten Fäden weist magnetisierbares Material auf oder ist davon gebildet. Der mindestens eine Faden der ersten Fäden erstreckt sich quer zur Umlaufrichtung. Der Erregermagnet ist derart angeordnet, sodass der Riemen in Umlaufrichtung an dem Erregermagnet vorbeigeführt wird, wenn der Riemen von der Antriebseinheit in Umlaufrichtung angetrieben wird. Der Erregermagnet ist zur Erzeugung eines Erregermagnetfelds ausgebildet. Der mindestens eine Faden der ersten Fäden ist durch das zugehörige magnetisierbare Material ausgebildet, von dem Erregermagnetfeld magnetisiert zu werden, sodass dann, wenn der mindestens eine Faden der ersten Fäden einen ununterbrochenen Faden bildet, eine erste Magnetisierung erzeugt wird und dann, wenn der mindestens eine Faden der ersten Fäden einen unterbrochenen Faden bildet, eine zweite Magnetisierung erzeugt wird. Die zweite Magnetisierung unterscheidet sich von der ersten Magnetisierung. Die Sensoreinheit ist in Umlaufrichtung von dem Erregermagneten beabstandet. Die Sensoreinheit ist zur kontaktlosen Erfassung einer Magnetisierung des in Umlaufrichtung an der Sensoreinheit vorbeigeführten mindestens einen Fadens der ersten Fäden ausgebildet. Die Sensoreinheit ist zur Erzeugung eines Sensorsignals ausgebildet, das die von der Sensoreinheit erfasste Magnetisierung des mindestens einen Fadens der ersten Fäden repräsentiert.

Das System weist die mehreren Umlenkrollen auf. Die mehreren Umlenkrollen können an einem Rahmen des Systems drehbar befestigt sein. Außerdem weist das System den Riemen auf. Der Riemen kann auch als Fördergurt bezeichnet werden. Des Weiteren weist das System die Antriebseinheit, den Erregermagneten und die Sensoreinheit auf. Die Antriebseinheit, der Erregermagnet und die Sensoreinheit können jeweils an dem Rahmen des Systems befestigt sein.

Ferner umschlingt der Riemen die Umlenkrollen jeweils teilweise, sodass von dem Riemen mindestens das erste Trum und das zweite Trum gebildet sind. Das erste Trum kann als Arbeitstrum bezeichnet werden und kann sich von einer ersten Umlenkrolle der Umlenkrollen zu einer zweiten Umlenkrolle der Umlenkrollen erstrecken. Das zweite Trum kann als Leertrum bezeichnet werden und kann sich von der ersten Umlenkrolle der Umlenkrollen zu der zweiten Umlenkrolle der Umlenkrollen erstrecken. Der erste Trum kann zum Transport des Transportguts vorgesehen sein, indem das Transportgut auf eine Tragseite des Riemens im Bereich des ersten Trums gegeben wird und von dem ersten Trum zu der zweiten Umlenkrolle gefördert wird. Der Riemen kann im Bereich des ersten Trums eine geradlinige Bewegung in Umlaufrichtung durchführen. Wird der Riemen an einer Umlenkrolle umgelenkt, kann die Umfangsrichtung entlang eines Kreisbahnabschnitts verlaufen.

Außerdem ist die Umlenkrolle der Umlenkrollen mit der Antriebseinheit gekoppelt, um den Riemen über diese Umlenkrolle in der Umlaufrichtung anzutreiben. Es können auch mehrere Umlenkrollen der Umlenkrollen mit der Antriebseinheit gekoppelt sein, um den Riemen über diese Umlenkrollen in der Umlaufrichtung anzutreiben. In jedem Fall wird der Riemen in Umfangsrichtung durch die Antriebseinheit angetrieben. Die Umfangsrichtung ist vorzugsweise die Richtung, in der sich der Riemen angetrieben bewegt.

Der Riemen weist das Trägermaterial und das Gewebe auf. Das Trägermaterial kann die Tragseite des Riemens bilden. Außerdem kann das Trägermaterial die Formstabilität des Riemens gewährleisten. Das Gewebe ist insbesondere vorgesehen, um einen hohen Verformungswiderstand des Riemens gegenüber Zugbelastungen bereitzustellen. Das Gewebe ist in dem Trägermaterial eingebettet. Die Einbettung des Gewebes in das Trägermaterial stellt eine optimale Kraftübertragung zwischen dem Gewebe und dem Trägermaterial bereit.

Das Gewebe weist die ersten Fäden und die sich zu den ersten Fäden quer erstreckenden zweiten Fäden auf. Durch die sich quer zueinander erstreckenden ersten Fäden und zweiten Fäden kann eine geringe Verformung des Riemens in quer zueinander verlaufenden Richtungen gewährleistet werden, insbesondere bei Zugbelastungen in diese Richtungen.

Der mindestens eine Faden der ersten Fäden weist das magnetisierbare Material auf oder ist davon gebildet. Der mindestens eine Faden der ersten Fäden kann das magnetisierbare Material und weiteres Material aufweisen. Alternativ kann der erste Faden vollständig aus dem magnetisierbaren Material bestehen. Das magnetisierbare Material kann, wenn es in und/oder durch ein Magnetfeld bewegt wird, von dem Magnetfeld derart magnetisiert werden, dass die Magnetisierung des magnetisierbaren Materials nach einem Bewegen des magnetisierbaren Materials aus dem Magnetfeld heraus bestehen bleibt und so die Magnetisierung des magnetisierbaren Materials von der Sensoreinheit kontaktlos erfasst werden kann. Bevorzugt weist jeder Faden der zweiten Fäden kein magnetisierbares Material auf, sodass die Magnetisierung des mindestens einen Fadens der ersten Fäden optimal erfasst werden kann.

Der mindestens eine Faden der ersten Fäden erstreckt sich quer zur Umlaufrichtung. Da sich der mindestens eine Faden der ersten Fäden quer zur Umlaufrichtung erstreckt, können insbesondere Risse, die in Umlaufrichtung durch den Riemen verlaufen dazu führen, dass der mindestens eine Faden der ersten Fäden bricht, sodass der mindestens eine Faden der ersten Fäden einen unterbrochenen Faden bildet. Wenn der mindestens eine Faden der ersten Fäden einen unterbrochenen Faden bildet, erlaubt dies einen Rückschluss darauf, dass ein Riss in Umlaufrichtung durch den Riemen verläuft.

Der Erregermagnet, der zur Erzeugung des Erregermagnetfelds ausgebildet ist, ist derart angeordnet, sodass der Riemen in Umlaufrichtung an dem Erregermagnet vorbeigeführt wird, wenn der Riemen von der Antriebseinheit in Umlaufrichtung angetrieben wird. Da der Riemen in Umlaufrichtung an dem Erregermagnet vorbeigeführt wird, sind Abschnitte des Riemens in Umlaufrichtung nacheinander in der Nähe des Erregermagnets angeordnet, sodass die Abschnitte des Riemens in Umlaufrichtung nacheinander in dem von dem Erregermagnet bereitgestellten Erregermagnetfeld angeordnet sein können. Insbesondere dann, wenn der Riemen in Umlaufrichtung angetrieben wird, kann der mindestens eine Faden der ersten Fäden bei jedem Umlauf des Riemens zumindest einmal in dem Erregermagnetfeld angeordnet sein oder durch dieses hindurch bewegt werden, sodass der mindestens eine Faden der ersten Fäden von dem Erregermagnetfeld magnetisiert wird.

Der mindestens eine Faden der ersten Fäden ist durch das zugehörige magnetisierbare Material ausgebildet, von dem Erregermagnetfeld magnetisiert zu werden, sodass dann, wenn der mindestens eine Faden der ersten Fäden einen ununterbrochenen Faden bildet, eine erste Magnetisierung erzeugt wird und dann, wenn der mindestens eine Faden der ersten Fäden einen unterbrochenen Faden bildet, eine zweite Magnetisierung erzeugt wird, wobei sich die zweite Magnetisierung von der ersten Magnetisierung unterscheidet. Wenn der mindestens eine Faden der ersten Fäden magnetisiert ist, wird aufgrund der Magnetisierung von dem mindestens einen Faden der ersten Fäden ein Magnetisierungsmagnetfeld bereitgestellt. Das Magnetisierungsmagnetfeld kann durch eine magnetische Feldstärke charakterisiert sein, sodass sich die zweite Magnetisierung von der ersten Magnetisierung so unterscheidet, dass, wenn der mindestens eine Faden der ersten Fäden einen ununterbrochenen Faden bildet, aufgrund der ersten Magnetisierung von dem mindestens einen Faden der ersten Fäden ein erstes Magnetisierungsmagnetfeld mit einer ersten magnetischen Feldstärke bereitgestellt wird und, dann, wenn der der mindestens eine Faden der ersten Fäden einen unterbrochenen Faden bildet, aufgrund der zweiten Magnetisierung von dem mindestens einen Faden der ersten Fäden ein zweites Magnetisierungsmagnetfeld mit einer zweiten magnetischen Feldstärke bereitgestellt wird. Des Weiteren kann dann, wenn der erste Faden einen unterbrochenen Faden bildet, sodass der erste Faden in mindestens zwei voneinander getrennten Abschnitten vorliegt, jeder Abschnitt der mindestens zwei voneinander getrennten Abschnitte, jeweils ein magnetisches Polpaar bilden, sodass das Magnetisierungsmagnetfeld durch die Anzahl der magnetischen Polpaare charakterisiert sein kann. In diesem Fall kann sich die zweite Magnetisierung von der ersten Magnetisierung so unterscheiden, dass, wenn der mindestens eine Faden der ersten Fäden einen ununterbrochenen Faden bildet, aufgrund der ersten Magnetisierung von dem mindestens einen Faden der ersten Fäden ein erstes Magnetisierungsmagnetfeld mit einem magnetischen Polpaar bereitgestellt wird und, dann, wenn der der mindestens eine Faden der ersten Fäden einen unterbrochenen Faden bildet, aufgrund der zweiten Magnetisierung von dem mindestens einen Faden der ersten Fäden ein zweites Magnetisierungsmagnetfeld mit zumindest zwei magnetischen Polpaaren bereitgestellt wird. Da sich die zweite Magnetisierung von der ersten Magnetisierung unterscheidet, kann über den Unterschied in der Magnetisierung auf einen ununterbrochenen und einen unterbrochenen Faden und somit dann, wenn ein Riss in dem Riemen in Umlaufrichtung verläuft, auf diesen Riss rückgeschlossen werden, sodass der Riss in Umlaufrichtung des Riemens frühzeitig erkannt werden kann.

Die Sensoreinheit ist in Umlaufrichtung von dem Erregermagneten beabstandet. Dadurch, dass die Sensoreinheit in Umlaufrichtung von dem Erregermagneten beabstandet ist, kann der mindestens eine Faden der ersten Fäden zunächst durch das Erregermagnetfeld magnetisiert werden und anschließend die Magnetisierung des mindestens einen Fadens der ersten Fäden von der Sensoreinheit erfasst werden, ohne, dass die Erfassung der Magnetisierung des mindestens einen Fadens der ersten Fäden durch das Erregermagnetfeld gestört wird.

Die Sensoreinheit ist zur kontaktlosen Erfassung einer Magnetisierung des in Umlaufrichtung an der Sensoreinheit vorbeigeführten mindestens einen Fadens der ersten Fäden ausgebildet. Wenn der Riemen in Umlaufrichtung angetrieben wird, so wird der mindestens eine Faden der ersten Fäden an der Sensoreinheit vorbeigeführt, sodass die Magnetisierung des mindestens einen Fadens der ersten Fäden periodisch mit jedem vollständigen Umlauf des Riemens mittels der Sensoreinheit kontaktlos erfasst werden kann.

Die Sensoreinheit ist zur Erzeugung des Sensorsignals ausgebildet, das die von der Sensoreinheit erfasste Magnetisierung des mindestens einen Fadens der ersten Fäden repräsentiert. Da das Sensorsignal die von der Sensoreinheit erfasste Magnetisierung des mindestens einen Fadens der ersten Fäden repräsentiert, kann anhand des Sensorsignals die Magnetisierung des mindestens einen Fadens der ersten Fäden erkannt werden.

Da das Sensorsignal die erfasste Magnetisierung repräsentiert und sich die zweite Magnetisierung von der ersten Magnetisierung unterscheidet, kann anhand des Sensorsignals auf einen ununterbrochenen und einen unterbrochenen Faden und dann, wenn ein Riss in dem Riemen in Umlaufrichtung verläuft, auf diesen Riss rückgeschlossen werden, sodass ein Riss in Umlaufrichtung des Riemens frühzeitig erkannt werden kann.

Der mindestens eine Faden der ersten Fäden ist ein Faden des Gewebes, welches in dem Trägermaterial eingebettet ist und eine mechanische Versteifung des Riemens gewährleisten kann. Gleichzeitig weist der mindestens eine Faden der ersten Fäden das magnetisierbare Material auf oder ist davon gebildet, sodass der mindestens eine Faden der ersten Fäden magnetisiert werden kann und anhand der Magnetisierung des mindestens einen Fadens der ersten Fäden darauf geschlussfolgert werden kann, ob der mindestens eine Faden der ersten Fäden einen ununterbrochenen Faden bildet und somit vermutlich kein Längsriss im Riemen in Umlaufrichtung verläuft oder, ob der mindestens eine Faden der ersten Fäden einen unterbrochenen Faden bildet und somit ein Längsriss im Riemen in Umlaufrichtung verläuft. Der mindestens eine Faden erfüllt somit gleichzeitig eine Verstärkungsfunktion und eine Indikationsfunktion, ob ein Längsriss im Riemen verläuft, sodass ein besonders leichter und platzsparender Riemen bereitgestellt werden kann. Insbesondere kann ein besonders leichter und platzsparender Riemen bereitgestellt werden, da auf getrennt voneinander vorliegende Verstärkungsgewebe und Inserts zur Risserkennung in dem Riemen verzichtet werden kann.

Zusammenfassend ist festzustellen, dass ein System mit einem Riemen bereitgestellt wird, wobei das System einen Längsriss in dem Riemen frühzeitig erkennt und gleichzeitig ein besonders leichter und platzsparender Riemen bereitgestellt wird.

Eine vorteilhafte Ausgestaltung des Systems zeichnet sich dadurch aus, dass jeder Faden der ersten Fäden jeweils magnetisierbares Material aufweist oder davon gebildet ist, wobei sich jeder Faden der ersten Fäden quer zur Umlaufrichtung erstreckt, wobei jeder Faden der ersten Fäden durch das zugehörige magnetisierbare Material ausgebildet ist, von dem Erregermagnetfeld magnetisiert zu werden, sodass dann, wenn der entsprechende Faden der ersten Fäden einen ununterbrochenen Faden bildet, eine erste Magnetisierung erzeugt wird und dann, wenn der entsprechende Faden der ersten Fäden einen unterbrochenen Faden bildet, eine zweite Magnetisierung erzeugt wird, die sich von der ersten Magnetisierung unterscheidet, wobei die Sensoreinheit zur kontaktlosen Erfassung einer Magnetisierung jedes in Umlaufrichtung an der Sensoreinheit vorbeigeführten Fadens der ersten Fäden ausgebildet ist, und wobei die Sensoreinheit zur Erzeugung eines Sensorsignals ausgebildet ist, das die von der Sensoreinheit erfasste Magnetisierung des entsprechenden Fadens repräsentiert. Für den Fall, dass jeder Faden der ersten Fäden jeweils magnetisierbares Material aufweist oder davon gebildet ist, gelten die im Zusammenhang mit dem mindestens einen Faden der ersten Fäden beschriebenen Merkmale, technischen Effekte und/oder Vorteile zumindest in analoger Weise auch für jeden Faden der ersten Fäden, sodass an dieser Stelle auf eine entsprechende Wiederholung verzichtet wird. Insbesondere steigt dann, wenn jeder Faden der ersten Fäden jeweils magnetisierbares Material aufweist oder davon gebildet ist, mit zunehmender Anzahl der ersten Fäden die Wahrscheinlichkeit, dass ein in Umlaufrichtung verlaufender Riss frühzeitig erkannt wird. Dies ist insbesondere der Fall, da mit einer zunehmenden Anzahl der ersten Fäden die Wahrscheinlichkeit steigt, dass ein in Umlaufrichtung verlaufender Riss in dem Riemen zu einem Versagen zumindest eines Fadens der ersten Fäden führt, sodass dieser Faden einen unterbrochenen Faden bildet und so über die Magnetisierung dieses Fadens auf den Riss rückgeschlossen werden kann.

Eine vorteilhafte Ausgestaltung des Systems zeichnet sich dadurch aus, dass das Trägermaterial Elastomermaterial, insbesondere Gummimaterial, aufweist oder davon gebildet ist. Es hat sich herausgestellt, dass Elastomermaterial besonders gut dafür geeignet ist, dass das Gewebe durch das Elastomermaterial gegen mechanische und chemische Abnutzung, die durch das zu transportierende Transportgut hervorgerufen werden kann, sowie gegen Eintritt von Feuchtigkeit geschützt wird. Insbesondere Gummimaterial hat sich hierfür als besonders vorteilhaft erwiesen.

Eine vorteilhafte Ausgestaltung des Systems zeichnet sich dadurch aus, dass sich das Gewebe vollständig umlaufend in Umlaufrichtung erstreckt, wobei die ersten Fäden in Umlaufrichtung gleichmäßig verteilt angeordnet sind. Die vollständige in Umlaufrichtung umlaufende Erstreckung des Gewebes gewährleistet, dass insbesondere Zugbelastungen in Umlaufrichtung zu keiner übermäßigen Verformung des Riemens in Umlaufrichtung führen. Die gleichmäßige Verteilung der ersten Fäden in Umlaufrichtung kann dafür sorgen, dass die Wahrscheinlichkeit einer Detektion von in Umlaufrichtung verlaufender Risse gleich hoch ist, unabhängig davon, an welcher Stelle in Umlaufrichtung des Riemens der Riss entsteht.

Eine vorteilhafte Ausgestaltung des Systems zeichnet sich dadurch aus, dass die ersten Fäden Schussfäden und die zweiten Fäden Kettfäden sind. Wenn die ersten Fäden Schussfäden und die zweiten Fäden Kettfäden sind, erstrecken sich die ersten Fäden bevorzugt senkrecht zur Umlaufrichtung und die zweiten Fäden erstrecken sich bevorzugt entlang der Umlaufrichtung.

Eine vorteilhafte Ausgestaltung des Systems zeichnet sich dadurch aus, dass die ersten Fäden Kettfäden und die zweiten Fäden Schussfäden sind. Wenn die ersten Fäden Kettfäden und die zweiten Fäden Schussfäden sind, erstrecken sich die ersten Fäden bevorzugt senkrecht zur Umlaufrichtung und die zweiten Fäden erstrecken sich bevorzugt entlang der Umlaufrichtung.

Eine vorteilhafte Ausgestaltung des Systems zeichnet sich dadurch aus, dass sich der mindestens eine Faden der ersten Fäden oder jeder Faden der ersten Fäden senkrecht zur Umlaufrichtung erstreckt/erstrecken. Wenn sich der mindestens eine Faden der ersten Fäden oder jeder Faden der ersten Fäden senkrecht zur Umlaufrichtung erstreckt/erstrecken, führt ein sich in Umlaufrichtung des Riemens ausbreitender Riss bevorzugt dazu, dass mindestens ein Faden der ersten Fäden derart beschädigt wird, dass dieser Faden einen unterbrochenen Faden bildet.

Eine vorteilhafte Ausgestaltung des Systems zeichnet sich dadurch aus, dass das magnetisierbare Material Stahl aufweist oder davon gebildet ist. Stahl hat sich als besonders mechanisch robustes magnetisierbares Material erwiesen.

Eine vorteilhafte Ausgestaltung des Systems zeichnet sich dadurch aus, dass der Riemen eine erste Deckschicht, eine zweite Deckschicht und eine Zwischenschicht aufweist, die sich jeweils vollständig umlaufend in Umlaufrichtung erstrecken und übereinander so angeordnet sind, dass die Zwischenschicht zwischen der ersten Deckschicht und der zweiten Deckschicht angeordnet ist, wobei die Zwischenschicht das Gewebe aufweist. Die erste Deckschicht kann zum Bilden der Tragseite des Riemens ausgebildet sein. Die zweite Deckschicht kann eine Antriebsseite des Riemens bilden, mit der der Riemen zum Eingriff mit den Umlenkrollen kommt, um an diesen umgelenkt zu werden. Daher kann die Antriebsseite als radial innenseitig an dem Riemen ausgebildet angesehen werden. Die erste Deckschicht und die zweite Deckschicht sind bevorzugt von dem Trägermaterial gebildet. Insbesondere weisen die erste Deckschicht und die zweite Deckschicht Gummimaterial auf oder sind aus diesem gebildet. Bevorzugt weist die Zwischenschicht das Gewebe und zumindest einen Abschnitt des Trägermaterials auf, sodass das Gewebe in dem Abschnitt des Trägermaterials der Zwischenschicht eingebettet ist. Das Trägermaterial der ersten Deckschicht, der zweiten Deckschicht und der Zwischenschicht kann eine Gummihülle bilden, die das Gewebe mechanisch und chemisch von außen schützt.

Eine vorteilhafte Ausgestaltung des Systems zeichnet sich dadurch aus, dass der Erregermagnet ein Dauermagnet ist. Ein Dauermagnet hat den Vorteil, dass ein gleichbleibendes Magnetfeld bereitgestellt werden kann, ohne dass hierfür elektrische Energie bereitgestellt werden muss.

Eine vorteilhafte Ausgestaltung des Systems zeichnet sich dadurch aus, dass der Erregermagnet ein Elektromagnet ist. Ein Elektromagnet hat den Vorteil, dass ein zeitlich variierbares Magnetfeld bereitgestellt werden kann.

Eine vorteilhafte Ausgestaltung des Systems zeichnet sich dadurch aus, dass die Sensoreinheit einen ersten Sensor und mindestens einen zweiten Sensor aufweist, wobei der erste Sensor und der mindestens eine zweite Sensor in Umlaufrichtung voneinander beabstandet sind. Der erste Sensor und der mindestens eine zweite Sensor, der in Umlaufrichtung von dem ersten Sensor beabstandet ist, ermögliche, dass an mehreren räumlich voneinander getrennten Orten in Umfangrichtung eine entsprechende Magnetisierung jedes in Umlaufrichtung an der Sensoreinheit vorbeigeführten Fadens der ersten Fäden kontaktlos erfasst werden kann.

Eine vorteilhafte Ausgestaltung des Systems zeichnet sich dadurch aus, dass das System eine Auswerteeinheit aufweist, wobei der Sensor zum Senden des Sensorsignals ausgebildet ist und die Auswerteeinheit zum Empfangen des Sensorsignals ausgebildet ist. Der Sensor ist mit der Auswerteeinheit direkt oder indirekt gekoppelt, um das Sensorsignal an die Auswerteeinheit zu übertragen. Die Auswerteeinheit ist konfiguriert, die von der Sensoreinheit erfasste Magnetisierung des mindestens einen Fadens der ersten Fäden basierend auf dem Sensorsignal zu erkennen. Außerdem ist die Auswerteeinheit konfiguriert, einen Magnetisierungswert, der die Magnetisierung des mindestens einen Fadens der ersten Fäden indiziert, basierend auf der Magnetisierung des mindestens einen Fadens der ersten Fäden zu ermitteln. Insbesondere kann die Auswerteeinheit einen Magnetisierungswert von Null oder Eins ermitteln, der einen ununterbrochenen (Null) bzw. einen unterbrochenen (Eins) ersten Faden repräsentiert. Für den Fall, dass der Magnetisierungswert Eins ist, kann von der Auswerteeinheit ein erstes Steuersignal an die Antriebseinheitseinheit gesendet werden, sodass die Antriebseinheit aufhört, den Riemen anzutreiben. Außerdem kann für den Fall, dass der Magnetisierungswert Eins ist ein zweites Steuersignal an eine Bremseinheit des Systems gesendet werden, sodass die Bremseinheit mit dem Riemen eingreift, sodass eine Bewegung des Riemens in Umlaufrichtung abgebremst und unterbunden wird.

Weitere Merkmale, Vorteile und Anwendungsmöglichkeiten der vorliegenden Erfindung ergeben sich aus der nachfolgenden Beschreibung der Ausführungsbeispiele und den Figuren.
- Figur 1: zeigt eine vorteilhafte Ausgestaltung des Systems in einer schematischen Ansicht.
- Figur 2: zeigt einen Abschnitt einer vorteilhaften Ausgestaltung des Riemens des Systems in einer schematischen Draufsicht.
- Figur 3: zeigt einen Abschnitt der vorteilhaften Ausgestaltung des Riemens des Systems in Figur 2 in einer schematischen Querschnittsansicht.

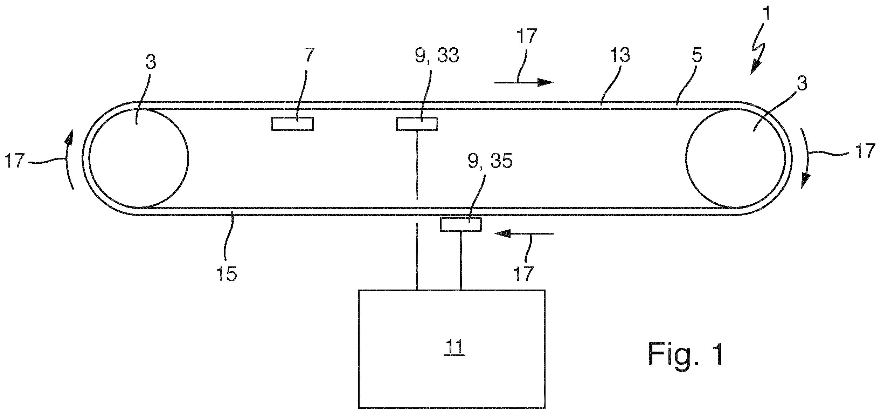

In Figur 1 ist eine vorteilhafte Ausgestaltung des Systems 1 in einer schematischen Ansicht dargestellt. Das System 1 weist zwei Umlenkrollen 3, einen Riemen 5, einen Erregermagneten 7, eine Sensoreinheit 9 und eine Auswerteeinheit 11 auf.

Die Umlenkrollen 3 sind jeweils teilweise von dem Riemen 5 umschlungen, sodass von dem Riemen 5 ein erstes Trum 13 und ein zweites Trum 15 gebildet sind. Die in Figur 1 rechts dargestellte Umlenkrolle 3 ist mit einer in Figur 1 nicht dargestellten Antriebseinheit gekoppelt, um den Riemen 5 über die in Figur 1 rechts dargestellte Umlenkrolle 3 in einer Umlaufrichtung 17 anzutreiben. Der Erregermagnet 7, der zur Erzeugung eines Erregermagnetfelds ausgebildet ist und in Umlaufrichtung 17 von der Sensoreinheit 9 beabstandet ist, ist derart angeordnet, sodass der Riemen 5 in Umlaufrichtung 17 an dem Erregermagnet 7 vorbeigeführt wird, wenn der Riemen 5 von der Antriebseinheit in Umlaufrichtung 17 angetrieben wird. In dem in Figur 1 dargestellten Beispiel ist der Erregermagnet 7 ein Dauermagnet, sodass ein gleichbleibendes Magnetfeld bereitgestellt werden kann. Der Erregermagnet 7 kann jedoch auch ein Elektromagnet sein, sodass ein zeitlich variierbares Magnetfeld bereitgestellt werden kann.

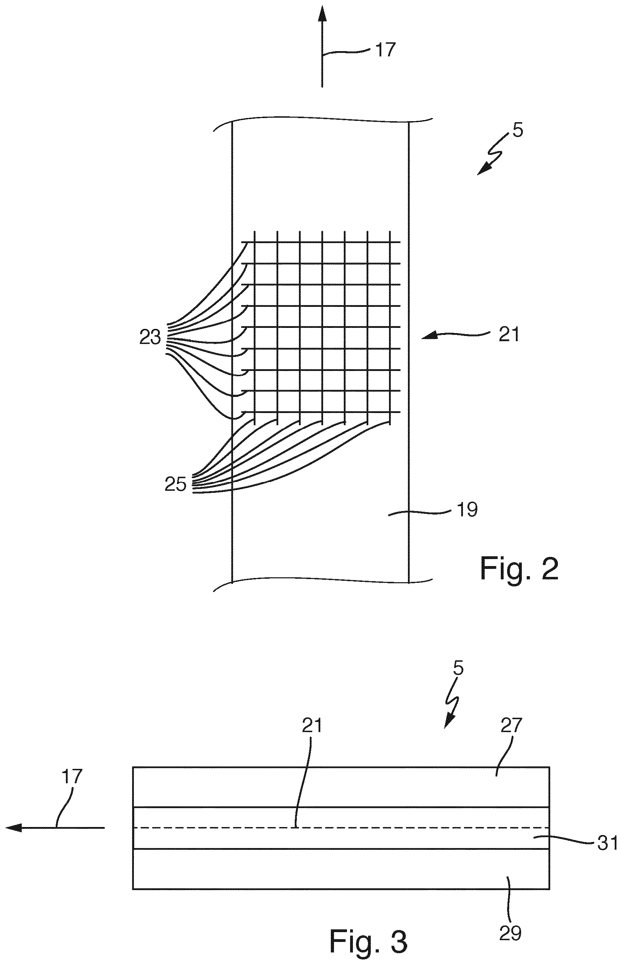

Figur 2 zeigt einen Abschnitt einer vorteilhaften Ausgestaltung des Riemens 5 des Systems 1 in einer schematischen Draufsicht. Der Riemen 5 weist ein Trägermaterial 19, das aus Elastomermaterial, insbesondere Gummimaterial, gebildet ist, und ein Gewebe 21 auf, das in dem Trägermaterial 19 eingebettet ist. Das Gewebe 21 ist in Figur 2 rein schematisch dargestellt und erstreckt sich vollständig umlaufend in Umlaufrichtung 17. Das Gewebe 21 weist erste Fäden 23 und zweite Fäden 25 auf. Die ersten Fäden 23 sind in Umlaufrichtung 17 gleichmäßig verteilt angeordnet und erstrecken sich so quer zur Umlaufrichtung 17, dass sie sich senkrecht zur Umlaufrichtung 17 erstrecken. Die zweiten Fäden 25 erstrecken sich vollständig umlaufend in Umlaufrichtung 17. Die zweiten Fäden 25 erstrecken sich somit so quer zu den ersten Fäden 23, dass sie senkrecht zu diesen angeordnet sind. In dem in Figur 2 dargestellten Beispiel sind die ersten Fäden 23 Schussfäden des Gewebes 21 und die zweiten Fäden 25 sind Kettfäden des Gewebes 21. Alternativ können auch die ersten Fäden 23 Kettfäden und die zweiten Fäden 25 Schussfäden sein.

Figur 3 zeigt einen Abschnitt der vorteilhaften Ausgestaltung des Riemens 5 des Systems 1 in Figur 2 in einer schematischen Querschnittsansicht. Der Riemen 5 weist eine erste Deckschicht 27, eine zweite Deckschicht 29 und eine Zwischenschicht 31 auf. Die erste Deckschicht 27, die zweite Deckschicht 29 und die Zwischenschicht 31 erstrecken sich jeweils vollständig umlaufend in Umlaufrichtung 17. Die erste Deckschicht 27, die zweite Deckschicht 29 und die Zwischenschicht 31 sind so übereinander angeordnet, dass die Zwischenschicht 31 zwischen der ersten Deckschicht 27 und der zweiten Deckschicht 29 angeordnet ist. Wie in Figur 3 durch die gestrichelte Linie symbolisiert dargestellt weist die Zwischenschicht 31 das Gewebe 21 auf.

Jeder Faden 23 der ersten Fäden 23 ist jeweils aus magnetisierbarem Material gebildet, das in dem vorliegenden Fall Stahl ist. Wie bereits beschrieben ist der Erregermagnet 7 ausgebildet ein Erregermagnetfeld zu erzeugen und ist so angeordnet, dass der Riemen 5 in Umlaufrichtung 17 an dem Erregermagnet 7 vorbeigeführt wird, wenn der Riemen 5 von der Antriebseinheit in Umlaufrichtung 17 angetrieben wird. Wenn der Riemen 5 in Umlaufrichtung 17 an dem Erregermagnet 7 vorbeigeführt wird, werden auch die ersten Fäden 23 an dem Erregermagnet 7 vorbeigeführt, sodass diese durch das von dem Erregermagnet 7 bereitgestellte Erregermagnetfeld bewegt werden. Da jeder Faden 23 der ersten Fäden 23 durch das zugehörige magnetisierbare Material gebildet ist, sind die ersten Fäden 23 ausgebildet, von dem Erregermagnetfeld magnetisiert zu werden. Wenn also die ersten Fäden 23 durch das Erregermagnetfeld bewegt werden, werden diese magnetisiert.

In dem Fall, dass der Riemen 5 unbeschädigt ist, sind auch die ersten Fäden 23 unbeschädigt, sodass jeder Faden 23 der ersten Fäden 23 einen ununterbrochenen Faden bildet. In dem Fall, dass der Riemen 5 einen Längsriss in Umlaufrichtung aufweist, so kann auch mindestens ein Faden 23 der ersten Fäden 23 beschädigt sein und einen unterbrochenen Faden bilden. Wenn ein entsprechender Faden einen ununterbrochenen Faden bildet, wird eine erste Magnetisierung erzeugt und wenn der entsprechende Faden einen unterbrochenen Faden bildet, wird eine zweite Magnetisierung erzeugt, die sich von der ersten Magnetisierung unterscheidet.

Die Sensoreinheit 9 ist zur kontaktlosen Erfassung einer Magnetisierung jedes in Umlaufrichtung 17 an der Sensoreinheit 9 vorbeigeführten Fadens 23 der ersten Fäden 23 ausgebildet. Die in Figur 1 dargestellte Sensoreinheit 9 weist einen ersten Sensor 33 und einen zweiten Sensor 35 auf. Der erste Sensor 33 und der zweite Sensor 35 sind in Umlaufrichtung 17 voneinander beabstandet angeordnet. Mithilfe des ersten Sensors 33 und des zweiten Sensors 35 kann an zwei räumlich voneinander getrennten Orten eine entsprechende Magnetisierung jedes in Umlaufrichtung 17 an der Sensoreinheit 9 vorbeigeführten Fadens 23 der ersten Fäden 23 kontaktlos erfasst werden. Des Weiteren ist die Sensoreinheit 9 zur Erzeugung eines Sensorsignals ausgebildet, das die von der Sensoreinheit 9 erfasste Magnetisierung des entsprechenden Fadens repräsentiert. Die Sensoreinheit 9 ist zum Senden des Sensorsignals ausgebildet und die Auswerteeinheit 11 ist zum Empfangen des Sensorsignals ausgebildet. Wenn die Auswerteeinheit 11 ein Sensorsignal empfängt, das die erste Magnetisierung repräsentiert, so kann auf einen entsprechenden ununterbrochenen ersten Faden 23 rückgeschlossen werden. Wenn die Auswerteeinheit 11 ein Sensorsignal empfängt, das die zweite Magnetisierung repräsentiert, so kann auf einen entsprechenden unterbrochenen Faden 23 rückgeschlossen werden und von der Auswerteeinheit 11 ein erstes Steuersignal an die Antriebseinheitseinheit gesendet werden, sodass die Antriebseinheit aufhört, den Riemen 5 anzutreiben. Außerdem kann für den Fall, dass auf einen entsprechenden unterbrochenen Faden 23 rückgeschlossen wird ein zweites Steuersignal an eine Bremseinheit gesendet werden, sodass die Bremseinheit mit dem Riemen 5 eingreift, sodass eine Bewegung des Riemens 5 in Umlaufrichtung 17 abgebremst und unterbunden wird.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichenliste

- 1: System
- 3: Umlenkrolle
- 5: Riemen
- 7: Erregermagnet
- 9: Sensoreinheit
- 11: Auswerteeinheit
- 13: erstes Trum
- 15: zweites Trum
- 17: Umlaufrichtung
- 19: Trägermaterial
- 21: Gewebe
- 23: erster Faden, erste Fäden
- 25: zweiter Faden, zweite Fäden
- 27: erste Deckschicht
- 29: zweite Deckschicht
- 31: Zwischenschicht
- 33: erster Sensor
- 35: zweiter Sensor

## Patentansprüche

1. System (1), das mehrere Umlenkrollen (3), einen Riemen (5), eine Antriebseinheit, und eine Sensoreinheit (9) aufweist,
wobei der Riemen (5) die Umlenkrollen (3) jeweils teilweise umschlingt, sodass von dem Riemen (5) mindestens ein erstes Trum (13) und ein zweites Trum (15) gebildet sind,
wobei eine Umlenkrolle (3) der Umlenkrollen (3) mit einer Antriebseinheitseinheit gekoppelt ist, um den Riemen (5) über diese Umlenkrolle (3) in einer Umlaufrichtung (17) anzutreiben,
wobei der Riemen (5) ein Trägermaterial (19) und ein Gewebe (21) aufweist, wobei das Gewebe (21) erste Fäden (23) und sich zu den ersten Fäden (23) quer erstreckende zweite Fäden (25) aufweist und in dem Trägermaterial (19) eingebettet ist,
**dadurch gekennzeichnet, dass** das System (1) einen Erregermagneten (7) aufweist, und
wobei mindestens ein Faden (23) der ersten Fäden (23) magnetisierbares Material aufweist oder davon gebildet ist,
wobei sich der mindestens eine Faden (23) der ersten Fäden (23) quer zur Umlaufrichtung (17) erstreckt,
wobei der Erregermagnet (7) derart angeordnet ist, sodass der Riemen (5) in Umlaufrichtung (17) an dem Erregermagnet (7) vorbeigeführt wird, wenn der Riemen (5) von der Antriebseinheit in Umlaufrichtung (17) angetrieben wird,
wobei der Erregermagnet (7) zur Erzeugung eines Erregermagnetfelds ausgebildet ist,
wobei der mindestens eine Faden (23) der ersten Fäden (23) durch das zugehörige magnetisierbare Material ausgebildet ist, von dem Erregermagnetfeld magnetisiert zu werden, sodass dann, wenn der mindestens eine Faden der ersten Fäden (23) einen ununterbrochenen Faden bildet, eine erste Magnetisierung erzeugt wird und dann, wenn der mindestens eine Faden (23) der ersten Fäden (23) einen unterbrochenen Faden bildet, eine zweite Magnetisierung erzeugt wird, die sich von der ersten Magnetisierung unterscheidet,
wobei die Sensoreinheit (9) in Umlaufrichtung (17) von dem Erregermagneten (7) beabstandet ist,
wobei die Sensoreinheit (9) zur kontaktlosen Erfassung einer Magnetisierung des in Umlaufrichtung (17) an der Sensoreinheit (9) vorbeigeführten mindestens einen Fadens (23) der ersten Fäden (23) ausgebildet ist, und
wobei die Sensoreinheit (9) zur Erzeugung eines Sensorsignals ausgebildet ist, das die von der Sensoreinheit (9) erfasste Magnetisierung des mindestens einen Fadens (23) der ersten Fäden (23) repräsentiert.

2. System (1) nach dem vorhergehenden Anspruch, wobei jeder Faden (23) der ersten Fäden (23) jeweils magnetisierbares Material aufweist oder davon gebildet ist, wobei sich jeder Faden (23) der ersten Fäden (23) quer zur Umlaufrichtung (17) erstreckt, wobei jeder Faden (23) der ersten Fäden (23) durch das zugehörige magnetisierbare Material ausgebildet ist, von dem Erregermagnetfeld magnetisiert zu werden, sodass dann, wenn der entsprechende Faden (23) der ersten Fäden (23) einen ununterbrochenen Faden bildet, eine erste Magnetisierung erzeugt wird und dann, wenn der entsprechende Faden (23) der ersten Fäden (23) einen unterbrochenen Faden bildet, eine zweite Magnetisierung erzeugt wird, die sich von der ersten Magnetisierung unterscheidet, wobei die Sensoreinheit (9) zur kontaktlosen Erfassung einer Magnetisierung jedes in Umlaufrichtung (17) an der Sensoreinheit (9) vorbeigeführten Fadens (23) der ersten Fäden (23) ausgebildet ist, und wobei die Sensoreinheit (9) zur Erzeugung eines Sensorsignals ausgebildet ist, das die von der Sensoreinheit (9) erfasste Magnetisierung des entsprechenden Fadens repräsentiert.

3. System (1) nach einem der vorhergehenden Ansprüche, wobei das Trägermaterial (19) Elastomermaterial aufweist oder davon gebildet ist.

4. System (1) nach einem der vorhergehenden Ansprüche, wobei sich das Gewebe (21) vollständig umlaufend in Umlaufrichtung (17) erstreckt, wobei die ersten Fäden (23) in Umlaufrichtung (17) gleichmäßig verteilt angeordnet sind.

5. System (1) nach einem der vorhergehenden Ansprüche, wobei die ersten Fäden (23) Schussfäden und die zweiten Fäden (25) Kettfäden sind.

6. System (1) nach einem der vorhergehenden Ansprüche 1 bis 4, wobei die ersten Fäden (23) Kettfäden und die zweiten Fäden (25) Schussfäden sind.

7. System (1) nach einem der vorhergehenden Ansprüche, wobei sich der mindestens eine Faden (23) der ersten Fäden (23) oder jeder Faden (23) der ersten Fäden (23) senkrecht zur Umlaufrichtung (17) erstreckt/erstrecken.

8. System (1) nach einem der vorhergehenden Ansprüche, wobei das magnetisierbare Material Stahl aufweist oder davon gebildet ist.

9. System (1) nach einem der vorhergehenden Ansprüche, wobei der Riemen (5) eine erste Deckschicht (27), eine zweite Deckschicht (29) und eine Zwischenschicht (31) aufweist, die sich jeweils vollständig umlaufend in Umlaufrichtung (17) erstrecken und übereinander so angeordnet sind, dass die Zwischenschicht (31) zwischen der ersten Deckschicht (27) und der zweiten Deckschicht (29) angeordnet ist, wobei die Zwischenschicht (31) das Gewebe (21) aufweist.

10. System (1) nach einem der vorhergehenden Ansprüche, wobei der Erregermagnet (7) ein Dauermagnet ist.

11. System (1) nach einem der vorhergehenden Ansprüche, wobei der Erregermagnet (7) ein Elektromagnet ist.

12. System (1) nach einem der vorhergehenden Ansprüche, wobei die Sensoreinheit (9) einen ersten Sensor (33) und mindestens einen zweiten Sensor (35) aufweist, wobei der erste Sensor (33) und der mindestens eine zweite Sensor (35) in Umlaufrichtung (17) voneinander beabstandet sind.

13. System (1) nach dem vorhergehenden Anspruch, wobei das System (1) eine Auswerteeinheit (11) aufweist, wobei die Sensoreinheit (9) zum Senden des Sensorsignals ausgebildet ist und die Auswerteeinheit (11) zum Empfangen des Sensorsignals ausgebildet ist.

## Claims

1. System (1), which comprises a number of deflection rollers (3), a belt (5), a drive unit and a sensor unit (9),
wherein the belt (5) wraps at least partially around the deflection rollers (3) in each case, so that at least a first strand (13) and a second strand (15) are formed by the belt (5),
wherein one deflection roller (3) of the deflection rollers (3) is coupled to a drive unit in order to drive the belt (5) in a circulating direction (17) by way of this deflection roller (3),
wherein the belt (5) comprises a carrier material (19) and a woven fabric (21), wherein the woven fabric (21) comprises first threads (23) and second threads (25), extending transversely in relation to the first threads (23), and is embedded in the carrier material (19),
**characterized in that** the system (1) comprises an exciter magnet (7), and
wherein at least one thread (23) of the first threads (23) comprises magnetizable material or is formed from it,
wherein the at least one thread (23) of the first threads (23) extends transversely in relation to the circulating direction (17),
wherein the exciter magnet (7) is arranged in such a way that the belt (5) is guided past the exciter magnet (7) in the circulating direction (17) when the belt (5) is driven by the drive unit in the circulating direction (17),
wherein the exciter magnet (7) is designed for generating an exciter magnetic field,
wherein the at least one thread (23) of the first threads (23) is formed by the associated magnetizable material to be magnetized by the exciter magnetic field such that, whenever the at least one thread of the first threads (23) forms an uninterrupted thread, a first magnetization is generated and, whenever the at least one thread (23) of the first threads (23) forms an interrupted thread, a second magnetization is generated, the second magnetization being different from the first,
wherein the sensor unit (9) is at a distance from the exciter magnet (7) in the circulating direction (17),
wherein the sensor unit (9) is designed for the contactless sensing of a magnetization of the at least one thread (23) of the first threads (23) guided past the sensor unit (9) in the circulating direction (17), and
wherein the sensor unit (9) is designed for generating a sensor signal which represents the magnetization of the at least one thread (23) of the first threads (23) that is sensed by the sensor unit (9).

2. System (1) according to the preceding claim, wherein each thread (23) of the first threads (23) in each case comprises magnetizable material or is formed from it, wherein each thread (23) of the first threads (23) extends transversely in relation to the circulating direction (17), wherein each thread (23) of the first threads (23) is formed by the associated magnetizable material to be magnetized by the exciter magnetic field such that, whenever the corresponding thread (23) of the first threads (23) forms an uninterrupted thread, a first magnetization is generated and, whenever the corresponding thread (23) of the first threads (23) forms an interrupted thread, a second magnetization is generated, the second magnetization being different from the first, wherein the sensor unit (9) is designed for the contactless sensing of a magnetization of each thread (23) of the first threads (23) guided past the sensor unit (9) in the circulating direction (17), and wherein the sensor unit (9) is designed for generating a sensor signal which represents the magnetization of the corresponding thread that is sensed by the sensor unit (9).

3. System (1) according to one of the preceding claims, wherein the carrier material (19) comprises an elastomer material or is formed from it.

4. System (1) according to one of the preceding claims, wherein the woven fabric (21) extends all the way around in the circulating direction (17), wherein the first threads (23) are arranged evenly distributed in the circulating direction (17).

5. System (1) according to one of the preceding claims, wherein the first threads (23) are weft threads and the second threads (25) are warp threads.

6. System (1) according to one of the preceding Claims 1 to 4, wherein the first threads (23) are warp threads and the second threads (25) are weft threads.

7. System (1) according to one of the preceding claims, wherein the at least one thread (23) of the first threads (23) or each thread (23) of the first threads (23) extends/extend perpendicularly in relation to the circulating direction (17).

8. System (1) according to one of the preceding claims, wherein the magnetizable material comprises steel or is formed from it.

9. System (1) according to one of the preceding claims, wherein the belt (5) comprises a first outer layer (27), a second outer layer (29) and an intermediate layer (31), which in each case extend all the way around in the circulating direction (17) and are arranged one over the other such that the intermediate layer (31) is arranged between the first outer layer (27) and the second outer layer (29), wherein the intermediate layer (31) comprises the woven fabric (21).

10. System (1) according to one of the preceding claims, wherein the exciter magnet (7) is a permanent magnet.

11. System (1) according to one of the preceding claims, wherein the exciter magnet (7) is an electromagnet.

12. System (1) according to one of the preceding claims, wherein the sensor unit (9) comprises a first sensor (33) and at least one second sensor (35), wherein the first sensor (33) and the at least one second sensor (35) are at a distance from one another in the circulating direction (17).

13. System (1) according to the preceding claim, wherein the system (1) comprises an evaluation unit (11), wherein the sensor unit (9) is designed for transmitting the sensor signal and the evaluation unit (11) is designed for receiving the sensor signal.

## Revendications

1. Système (1), qui comporte plusieurs rouleaux de renvoi (3), une courroie (5), une unité d'entraînement et une unité de détection (9),
la courroie (5) s'enroulant partiellement autour des rouleaux de renvoi (3) de sorte que la courroie (5) forme au moins un premier brin (13) et un deuxième brin (15),
un rouleau de renvoi (3) des rouleaux de renvoi (3) étant accouplé à une unité d'entraînement pour entraîner la courroie (5) par le biais de ce rouleau de renvoi (3) dans un sens de rotation (17),
la courroie (5) comportant un matériau de support (19) et un tissu (21), le tissu (21) comportant des premiers fils (23) et des deuxièmes fils (25) qui s'étendent transversalement aux premiers fils (23) et étant intégré dans le matériau de support (19),
**caractérisé en ce que** le système (1) comporte un aimant d'excitation (7), et
au moins un fil (23) des premiers fils (23) comportant un matériau magnétisable ou étant formé de celui-ci,
l'au moins un fil (23) des premiers fils (23) s'étendant transversalement au sens de rotation (17),
l'aimant d'excitation (7) étant disposé de sorte que la courroie (5) soit guidée devant l'aimant d'excitation (7) dans le sens de rotation (17) lorsque la courroie (5) est entraînée par l'unité d'entraînement dans le sens de rotation (17),
l'aimant d'excitation (7) étant conçu pour générer un champ magnétique d'excitation,
l'au moins un fil (23) des premiers fils (23) passant à travers le matériau magnétisable associé étant conçu pour être magnétisé par le champ magnétique d'excitation de sorte que, lorsque l'au moins un fil des premiers fils (23) forme un fil continu, une première magnétisation soit générée et, lorsque l'au moins un fil (23) des premiers fils (23) forme un fil discontinu, une deuxième magnétisation soit générée, qui est différente de la première magnétisation,
l'unité de détection (9) étant distante de l'aimant d'excitation (7) dans le sens de rotation (17),
l'unité de détection (9) étant conçue pour détecter sans contact une magnétisation de l'au moins un fil (23) des premiers fils (23) qui est guidé devant l'unité de détection (9) dans le sens de rotation (17), et
l'unité de détection (9) étant conçue pour générer un signal de détection qui représente la magnétisation de l'au moins un fil (23) des premiers fils (23) détectée par l'unité de détection (9).

2. Système (1) selon la revendication précédente, chaque fil (23) des premiers fils (23) comportant un matériau magnétisable ou étant formé de celui-ci, chaque fil (23) des premiers fils (23) s'étendant transversalement au sens de rotation (17), chaque fil (23) des premiers fils (23) passant à travers le matériau magnétisable associé étant conçu pour être magnétisé par le champ magnétique d'excitation de sorte que, lorsque le fil correspondant (23) des premiers fils (23) forme un fil continu, une première magnétisation soit générée et, lorsque le fil correspondant (23) des premiers fils (23) forme un fil discontinu, une deuxième magnétisation soit générée, qui est différente de la première magnétisation, l'unité de détection (9) étant conçue pour détecter sans contact une magnétisation de chaque fil (23) des premiers fils (23) qui est guidé devant l'unité de détection (9) dans le sens de rotation (17), et l'unité de détection (9) étant conçue pour générer un signal de détection qui représente la magnétisation du fil correspondant détectée par l'unité de détection (9).

3. Système (1) selon l'une des revendications précédentes, le matériau de support (19) comportant un matériau élastomère ou étant formé de celui-ci.

4. Système (1) selon l'une des revendications précédentes, le tissu (21) s'étendant sur toute la périphérie dans le sens de rotation (17), les premiers fils (23) étant disposés de manière uniformément répartie dans le sens de rotation (17).

5. Système (1) selon l'une des revendications précédentes, les premiers fils (23) étant des fils de trame et les deuxièmes fils (25) étant des fils de chaîne.

6. Système (1) selon l'une des revendications précédentes 1 à 4, les premiers fils (23) étant des fils de chaîne et les deuxièmes fils (25) étant des fils de trame.

7. Système (1) selon l'une des revendications précédentes, l'au moins un fil (23) des premiers fils (23) ou chaque fil (23) des premiers fils (23) s'étendant perpendiculairement au sens de rotation (17).

8. Système (1) selon l'une des revendications précédentes, le matériau magnétisable comportant de l'acier ou étant formé de celui-ci.

9. Système (1) selon l'une des revendications précédentes, la courroie (5) comportant une première couche de revêtement (27), une deuxième couche de revêtement (29) et une couche intermédiaire (31), lesquelles s'étendent chacune sur toute la périphérie dans le sens de rotation (17) et qui sont disposées les unes au-dessus des autres de sorte que la couche intermédiaire (31) soit disposée entre la première couche de revêtement (27) et la deuxième couche de revêtement (29), la couche intermédiaire (31) comportant le tissu (21).

10. Système (1) selon l'une des revendications précédentes, l'aimant d'excitation (7) étant un aimant permanent.

11. Système (1) selon l'une des revendications précédentes, l'aimant d'excitation (7) étant un électroaimant.

12. Système (1) selon l'une des revendications précédentes, l'unité de détection (9) comportant un premier capteur (33) et au moins un deuxième capteur (35), le premier capteur (33) et l'au moins un deuxième capteur (35) étant espacés l'un de l'autre dans le sens de rotation (17).

13. Système (1) selon la revendication précédente, le système (1) comportant une unité d'évaluation (11), l'unité de détection (9) étant conçue pour émettre le signal de détection et l'unité d'évaluation (11) étant conçue pour recevoir le signal de détection.
